# EUROPÄISCHE PATENTSCHRIFT

(11) **EP 1 387 156 B1**
(45) Veröffentlichungstag und Bekanntmachung des Hinweises auf die Patenterteilung: **07.06.2006**
(21) Anmeldenummer: 03017037.7
(22) Anmeldetag: 28.07.2003
(51) Int. Cl.: G01M 3/40, G01M 3/16, G01M 3/18

(54) **Verfahren und Anordnung zur Feststellung von Leckagen in einer absperrenden Wandung**
Method and device for determining the existences of leaks in blocking walls
Procédé et dispositif de détermination de l'existence de fuites dans des parois bloquantes

(30) Priorität: 29.07.2002 DE 10234620; 14.04.2003 DE 10317073
(43) Veröffentlichungstag der Anmeldung: 04.02.2004
(73) Patentinhaber: Texplor GmbH, 14482 Potsdam (DE)
(72) Erfinder: Geutebrück, Ernst, 1210 Wien (AT)
(74) Vertreter: Bittner, Thomas L.

(56) Entgegenhaltungen:
- WO-A-94/29752
- DE-A- 4 219 434
- DE-A- 4 223 752
- US-A- 2 607 012
- US-A- 5 640 096

## Beschreibung

Die Erfindung betrifft ein zerstörungsfreies Verfahren und eine zweckmässig gestaltete Anordnung zur Feststellung von Leckagen, wie sie beispielsweise im Tief- und Hochbau sowie im Kanalbereich und bei der Lecksuche bei Dächern, bei Dichtungswänden, Erdtanks, Grundbauwerken, medienführenden Unterwasserleitungen und dergleichen Einrichtungen auftreten können. Ebenso ist eine Anwendung beim Monotoring von Feuchtigkeits- und Zuflussverhältnissen gegeben.

Nach einer Firmenschrift der Firma Munters, D 21 035 Hamburg, mit dem Titel "Kleine Ursache - grosse Wirkung" erfolgt die Feststellung von Leckagen, indem der Versuch unternommen wird, durch akustische Verfahren ein Leck festzustellen. Das ist im allgemeinen ungenau und bei unterirdisch zu vermutenden Lecks regelmässig nicht möglich. Gleiches ist für thermografische Verfahren festzustellen. Seit Jahrzehnten bekannt ist die Feststellung von Leckagen durch Befüllung eines vermutlich defekten Behältnisses mit einem Prüfgas. Diese Methode erfordert, dass das vermutet defekte Gefäss allseitig besichtigt werden kann, wie das bei freiliegenden Rohrleitungen der Fall ist. Ist die Rohrleitung nicht allseitig zu besichtigen, haben endoskopische Verfahren den Vorzug, die häufig mit einer Feuchtemessung gekoppelt sind. Deren Einsatz ist jedoch ebenso beschränkt, wie das vergleichsweise beim Einsatz elektronischer Verfahren der Fall ist.

Besonders bei älteren Bauwerken kommen Verfahren zum Einsatz, die die Störung eines initiierten bestimmbaren Potentialfeldes oder Mikrowellen zur Ermittlung von Leckagen - es handelt sich hier eher um eine Feuchtefeststellung - benutzen. Auch hier sind die Einsatzgebiete begrenzt. Bestenfalls sind diese Verfahren in geringen Teufen anwendbar, wobei Unsicherheiten in der Feststellung dann erheblich zunehmen.

Es hat deshalb nicht an Versuchen gefehlt, die Verfahrenssicherheit zu erhöhen. Hierbei wurden für spezifische Zwecke auch brauchbare Verfahren entwickelt, wie beispielhaft ein derartiges in DE-OS 42 31 896 zur Dichtheitsprüfung von Abdichtungen aus Kunststoffbahnen beschrieben ist. Hier wird der Stromfluss hinsichtlich seiner absoluten Grösse zur Dichtheitsprüfung herangezogen.

Nach weiteren Schriften, so beispielhaft die DE-OS 199 21 556 und ebenso die JP-Publikationsnummer 2002156305, wird ein zwischen zwei Polen fliessender elektrischer Strom hinsichtlich seiner absoluten Höhe zur Beurteilung der Dichtheit herangezogen. Konkret beziehen sich die Sachverhalte auf die Prüfung der Dichtheit von Dächern und von mit Folie abgedichteten Wasserbekken, durch die Ionen wandern. Im Falle der Feststellung der Dichtheit eines Wasserbeckens, einer Deponie oder dergleichen Anwendungsfällen führt die Durchführung des dargestellten Verfahrens nur dann zu objektiven Aussagen, wenn der Chemismus des die Messfühler umhüllenden Bodens sowie seine Auswirkungen und die daraus resultierende elektrische Leitfähigkeit konkret bekannt sind. So würde eine unbekannte Salzablagerung im zu prüfenden Material, zum Beispiel im Boden oder in trockenem Mauerwerk, eine entschiedene Verbesserung der Leitfähigkeit bedingen. Damit würde eine Undichtheit angenommen und dokumentiert werden, ohne dass diese tatsächlich vorhanden ist. Damit ist eine mobile Anwendung des jeweiligen Verfahrens und der Einsatz einer dementsprechend aufgebauten Anordnung nicht immer möglich.

Zur Lösung besonderer Aufgaben, wie die Gewinnung geophysikalischer Daten, wird nach der EP 0 729 590 vorgeschlagen, im relevanten Erdreich über ein Gleichstromfeld und dessen Veränderung Rückschlüsse auf die elektrochemischen Eigenschaften des anstehenden Bodens zu gewinnen. Eine Lösung mit gleicher Wirkung beschreibt die in der Schrift AT 378 854 vorgeschlagene Anordnung. Zunächst spielen Störungen durch differierende Bodenverhältnisse oder gar Verwerfungen im Boden hier eine Rolle, des weiteren ist auf eine andere Aussage abgestellt. Es werden Aussagen zum spezifischen Widerstand des anstehenden Bodens und dergleichen getroffen, jedoch ist eine gezielte Anwendung der genannten Verfahren zur Leckageortung nicht gegeben.

US 5,640,096 offenbart ein tragbares System zur Feststellung von Leckagen in einer Membran eines mit Wasser gefüllten Schwimmbeckens. Das System umfasst einen Signalgeber und eine Probe. Mittels einer schwimmenden Anode und eines benachbart zur Membran angeordneten Erdungsstabs koppelt der Signalgeber einen elektrischen Strom mit einer Frequenz von 5 - 15 Hz in das Wasser ein. Anschließend wird die Probe, welche zwei beabstandete Elektroden umfaßt, entlang der Wasseroberfläche bewegt, um Messwerte zu messen, welche Stromgradienten auf der Wasseroberfläche kennzeichnen. Die gemessenen Messwerte werden einer Verarbeitungseinheit zugeführt, welche diese Auswertet und mit den vom Signalgeber erzeugten Signalen vergleicht. Die Verarbeitungseinheit ist ferner mit einem Kopfhörer oder einem Laufsprecher verbunden, um mittels Geräuschsignalen das Vorhandensein einer Leckage anzuzeigen.

US 2,607,012 beschreibt ein radiometrisches Verfahren zur Dichtheitsmessung, bei dem über einen rotationsfähigen Detektor die Dichtheit von Schweißnähten festgestellt wird. Hierzu wird die Konzentration radioaktiver Substanzen gemessen.

WO 94/29752 beschreibt ein Verfahren zum Ermitteln geophysikalischer und geochemischer Parameter auf einer Oberfläche. Hierzu wird in einer Ausführungsform ein Stromimpuls in den Boden eingespeist, während mittels einer Vielzahl am Boden angeordneter Proben Potentiale gemessen werden. Die gemessenen Potential werden anschließend mittels eines Mikroprozessors verarbeitet und in einer Reliefkarte angezeigt zu werden, aus der dann die geophysikalischen und geochemischen Parameter ermittelt werden können.

Aufgabe der Erfindung ist, ein Kosten sparendes Verfahren und eine Kosten sparende Einrichtung zu entwickeln, die, wenn gewünscht, kontinuierlich Übertage wie Untertage unter den unterschiedlichsten Einsatzbedingungen gleichermaßen einsetzbar sind, um Leckstellen aufzuspüren. Universalität und Genauigkeit gegenüber bekannten Verfahren und Einrichtungen sollen ebenso unter schwierigen räumlichen Einsatz- und Umgebungsbedingungen verbessert werden.

Die Aufgabe wird gelöst, indem einerseits einer zu prüfenden, einen Flüssigkeitsdurchgang verhindernden absperrenden Wandung, die vorzugsweise in eine überwiegend homogene Masse eingebettet ist, wie sie das Erdreich oder eine umgebende Flüssigkeit darstellen, wenigstens eine Aufgabestelle und auf der anderen Seite der absperrenden Wandung wenigstens eine Abgreifstelle angeordnet sind. Von einer Stromquelle ist ein Pol dieser Stromquelle mit der Aufgabestelle verbunden, der andere dagegen mit der Abgreifstelle. Über die Stromquelle wird eine willkürlich vorgewählte definierbare Spannung und eine willkürlich definierte Stromstärke angelegt. Damit fließt zwischen Aufgabestelle und Abgreifstelle ein elektrischer Strom.

Unabhängig davon, ob es sich um Gleich- oder Wechselstrom handelt, baut sich über den Stromfluss zwischen beiden Polen ein konstantes elektrisches Feld auf. Entlang der auf Dichtheit zu prüfenden Wandung ergeben sich dort Veränderungen des elektrischen Feldes im Sinne von Anomalien; wo ein Flüssigkeitsdurchtritt erfolgt. Diese Veränderungen des elektrischen Feldes werden als Mass für einen vorhandenen Feuchte- beziehungsweise Flüssigkeitsdurchtritt ermittelt und als Messgrösse für eine Bewertung bereitgestellt. Dieses Abtasten erfolgt, vorzugsweise unter Bezugnahme auf identifizierbare Koordinaten über einen Messwertaufnehmer, der deshalb mit Aufgabestelle oder Abgreifstelle verbunden ist, damit ein Referenzwert zum Vergleich zur Verfügung steht und der aus Sensor und einem Datenlogger besteht. Eine erfindungsgemässe Variante sieht vor, dass der Sensor des Messwertaufmehmers roiterend ausgebildet ist. Diese Variante ist vorzugsweise dann einsetzbar, wenn der Messwertaufnehmer beispielsweise in einer Abwasserleitung und einem Feldaufbau von aussen nach innen eingesetzt werden soll.

Im weiteren werden die vom Messwertaufnehmer registrierten Daten aufgenommen, aufgezeichnet und vorzugsweise ausgeschrieben, um sie auslesen zu können. Das kann in horizontaler Richtung in zeitlicher Abfolge verändert, jedoch ebenso in vertikaler Richtung erfolgen. Überall dort, wo sich Spitzen abzeichnen, sind Undichtheiten vorhanden, die einen Flüssigkeitsdurchtritt, der in der Regel unerwünscht ist, markieren. Gemessene Werte werden im Vergleich zu den Referenzwerten als Nachweis für die durch die absperrende Wand durchdringende Flüssigkeit für weitere Betrachtungen als Signal bereitgestellt.

Damit ist es ebenso möglich, die anliegenden Kennwerte des elektrischen Feldes hinsichtlich ihrer absoluten Höhe nach festzustellen und anzuzeigen. Die ermittelten Werte sind relativ adäquat dem Flüssigkeitsdurchgang.

Das Abtasten erfolgt, um eine Reproduzierbarkeit und Lokalisierung zu ermöglichen, innerhalb eines festgelegten Rasters. Dieses Raster wird bei der Feststellung von Abweichungen, also der Feststellung von Undichtheiten, verkleinert, um bei beizuhaltender Lokalisierungsmöglich- und Reproduzierbarkeit den Umständen angepasst den Verlauf von Maximalwerten explizit registrieren und ausschreiben zu können und so, wenn vorhanden, auch Risse in der abdichtenden Wandung lokalisieren zu können.

Eine erfindungsgemässe Vorzugsvariante sieht vor, dass die ermittelten Werte der elektrischen Feldlinien und ihrer Anonmalien per Monotoring ausgewiesen werden.

Der Aufbau einer erfindungsgemäss ausgestalteten Einrichtung ist dadurch gekennzeichnet, dass der aus Sensor und Datenlogger bestehende Messwertaufnehmer, wie bereits beschrieben, mit dem in seiner Nähe befindlichen nächsten Pol elektrisch/elektronisch verbunden ist, um einen Referenzwert für die Bewertung der ermittelten Signale im Datenlogger zu haben und gleichzeitig mögliche Umgebungsstörungen auszuschliessen.

Eine zweckmässige Ausgestaltung der Erfindung sieht vor, dass die Gegenelektrode, wenn sie im umgebenden Erdreich angeordnet ist, einen Sensor aufweist, der weitere Informationen zur Registriereinheit liefern kann, beispielsweise in Abhängigkeit von seiner Bauart Angaben zur Temperatur oder der Feuchte an der Messstelle und dergleichen Angaben zur Umgebung, sodass Zusatzinformationen zur Umgebung erfassbar sind. Es ist ebenso möglich, dass Elektrode und Gegenelektrode mit einem ortungsfähigen Baustein ausgerüstet sind, um beispielsweise Schlussfolgerungen über die tatsächliche Tiefe der Messstelle ziehen zu können, um eine eventuelle Abweichung bei einem Verlaufen bei einer zum Einbringen der Elektrode oder Gegenelektrode erforderlichen Bohrung kompensieren zu können.

Um am Messwertaufnehmer wie auch immer ermittelte Werte zur Anzeige und Auswertung zu bringen, kann ein übliches Kabel verwendet werden. Es ist jedoch ebenso möglich, diesen mit einer bekannten zur Funkübertragung geeigneten Einrichtung zu versehen. Weiters ist es ebenso möglich, einen oder mehrere Messwertaufnehmer kurzfristig in einem Verdachtsbereich zu montieren und die Leckageverhältnisse über einen Zeitraum "X" aufzuzeichnen und/oder per Monotoring ständig anzuzeigen. Auch hier ermöglicht eine Funkübertragung den Fernzugriff auf die Messdaten. Die Datenerfassung, Übertragung und Auswertung kann auch hier automatisiert erfolgen.

Eine weitere zweckmässige Ausgestaltung der Erfindung sieht vor, dass - beispielsweise bei Dichtungswänden - diese mit einer zur GPS-Übertragung geeigneten Einrichtung versehen sind, um eine ständige Kenntnisnahme der Werte an geeigneter Stelle zu ermöglichen.

Wie bereits angedeutet, können die ermittelten Werte als Signale einem Rechner aufgegeben werden. Hier werden diese programmtechnisch aufbereitet. Sind Werte bekannt, die sich mit einer unbehandelten homogenen Masse ergeben haben (Dieser Wert kann ebenfalls "Null" sein), ist eine Basis für vergleichende Betrachtungen gegeben, da aus anderen Messungen ebenfalls Erfahrungen vorliegen, bei welcher Differenz in den Kennwerten des elektrischen Feldes, bezogen auf den zeitlichen Verlauf, welcher Flüssigkeitsdurchtritt erfolgte. Über eine zweckbestimmte Software lassen sich Näherungswerte zum Umfang der Leckage rechnerisch ermitteln.

Es ist ebenso möglich, die Messwerte zur Gewinnung weiterer geophysikalischer Aussagen bereitzustellen. Beispielsweise könnte ein starkes Differieren der Messwerte, ohne dass definitiv Flüssigkeitsabgänge feststellbar sind, ein Hinweis auf einen Hohlraum im Boden sein.

Der elektrische Strom an der Aufgabestelle kann ständig anliegen, er kann ebenso gepulst aufgegeben werden. Ebenso kann die Messwerterfassung und/oder -darstellung ständig oder diskontinuierlich in Form einer Momentananzeige und damit zeitlich gestreckt erfolgen. Vorteilhafterweise werden die ermittelten Angaben jedoch in der Registriereinrichtung gespeichert und bei Bedarf ausgeschrieben.

Die Erzeugung einer für den Betrieb der Anordnung notwendigen elektrischen Spannung kann im stationären Betrieb, beispielsweise bei einer sich in der Vertikalen erstreckenden Dichtungswand, über einen Anschluss an ein in der Nähe befindliches stationäres Netz erfolgen. Im reinen Baustelleneinsatz wird vorzugsweise ein Akkumulator verwendet.

Um eine Leckage aufzufinden, ist es notwendig, die Positionen des Messwertaufnehmers, der sich immer zwischen Aufgabestelle und Abgreifstelle befindet, zu verändern, weil auf Grund des sich zwischen beiden aufbauenden elektrischen Feldes letztlich nur die Strecke zwischen beiden relevant ist. Über die horizontale Positionsveränderung wird eine neue Kurve geschrieben. Wird diese zur vorhergehenden in Beziehung gebracht, sind weitergehende Erkenntnisse möglich. So lässt sich beipielsweise ein Riss und dessen weiterer Verlauf feststellen. Es ist nicht auszuschliessen ist, dass weitere Positionsveränderungen und neue Messungen zur Lokalisierung nötig sind.

Es ist ebenso möglich, eine Vielzahl von Elektroden für die Aufgabestelle und Gegenelektroden für die Abgreifstelle einzubringen, wenn es um die Dichtheitsmessung entlang einer absperrenden Wand mit grösserer Längsausdehnung geht. Diese können einzeln oder gruppenweise zugeschalten sein.

Handelt es sich um ein in sich geschlossenes Grundbauwerk, beispielsweise ein rundes oder ovales, mit Flüssigkeit gefülltes Grundbauwerk, bei dem ein Leck zu vermuten ist, wird vorzugsweise die Aufgabestelle im Inneren angeordnet. Auf der Aussenseite sind mehrere Abgreifstellen in den Boden eingebracht oder mit nur einer Elektrode wird nach jeder Messung systematisch die Position verändert, bis eine zweifelsfreie Lokalisierung über den Messwertaufnehmer gegeben ist. Auf der zugänglichen freien Innenseite des mit Flüssigkeit gefüllten Grundbauwerkes wird der Messwertaufnehmer bewegt, um dem Verlauf des elektrischen Feldes adäquate Werte gewinnen zu können.

Ebenso ist es möglich und zweckmässig, bezogen auf die Tiefe der zu überprüfenden absperrenden Wandung, Elektrode oder Gegenelektrode in unterschiedlichen Tiefen anzuordnen, um die Leckage höhenmässig zu bestimmen, falls die Streuung des elektrischen Feldes zu gross ist. In diesem Falle kann es ebenso zweckmässig sein, mit mehreren übereinander angeordneten Elektroden oder Gegenelektroden zu arbeiten.

Damit ist es mittels der erfindungsgemässen Lösung möglich, punktuell, linienförmig und flächenhaft Messwerte zu ermitteln und aufzubereiten, um Rückschlüsse auf die Grösse eines Lecks und/oder auf auslaufende oder zulaufende Mengen zu ziehen.

Die als Aufgabe- und Abgreifstelle dienenden Elektroden sind den Anwendungsbedingungen zweckentsprechend ausgeführt. Im Allgemeinen sind beide stabförmig ausgeführt und regelmässig bis zur Spitze isoliert sind, damit der Stromaustritt konzentriert und lokalisierbar erfolgt.

Für den Fall einer Leckagefeststellung in einem rohrförmigen Körper, wie es ebenfalls Kanalbauteile sein können, sieht eine erfindungsgemässe Vorzugsvariante vor, dass das als Messwertaufnehmer verwendete Bauteil auf einem zweckentsprechend ausgestaltetern Schlitten befestigt ist.

Dieser Schlitten weist zunächst Längsrichtung des zu untersuchenden rohrförmigen Körpers eine Längsausdehnung auf. In Längsrichtung der gedachten Mittellängsachse des zu untersuchenden rohrförmigen Körpers zueinander beabstandet und in Richtung der Mittellängsachse sind wenigstens zwei sternförmige Halterungen gleicher Teilung symmetrisch zueinander angeordnet, die durch ein Trageteil miteinander verbunden sein können. Diese sternförmigen Halterungen weisen in gleicher Teilung strahlenförmig angeordnet Radialteile auf, die bezogen auf die sternförmigen Halterungen gleicher Teilung symmetrisch zueinander ausgebildet sind.

Eine erfindungsgemässe Vorzugsvariante sieht vor, dass jeweils 3 strahlenförmige Radialteile ausgebildet und diese vorzugsweise im Winkel von 120 Winkelgrad angeordnet sind. Alle strahlenförmigen Radialteile können in radialer Richtung teleskopisch ausgebildet sein. Die Enden der strahlenförmigen Radialteile der sternförmigen Halterungen sind brückenartig durch jeweils ein U-förmig ausgebildetes Verbindungsteil paarweise miteinander verbunden, sodass sich eine stabile Lagerung der zu dem Schlitten ergänzten durch ein Trageteil miteinander verbundenen sternförmigen Halterungen in dem zu untersuchenden rohrförmigen Körper ergibt, die durch die teleskopische Ausbildung der Radialteile zum Zweck einer hinreichenden Führung dem Innendurchmesser des zu untersuchenden rohrförmigen Körper angepasst werden kann.

Auf der dem zu untersuchenden rohrförmigen Körper zugewandten Aussenseite der U-förmig ausgebildeten Verbindungsteile tragen diese Rollen, damit der Schlitten ohne wesentliche Eigenhemmung in Längsrichtung des zu untersuchenden rohrförmigen Körpers verziehbar ist.

Wenigstens einem der beiden Radialteile in Richtung der gedachten Mittellängsachse ist an einer freien Stirnseite ein Rotator mit einem weiteren Teleskoparm in radialer Richtung sich erstreckend vorgesetzt, der an seinem Ende eine Halterung für den Messwertaufnehmers aufweist, sodass durch den Teleskoparm eine beabstandete Einstellung des Messwertaufnehmers auf den Innendurchmesser des zu untersuchenden rohrförmigen Körpers möglich ist. Des weiteren trägt der Schlitten einen Antrieb für den Rotator. Damit kann der Rotator beim Verziehen des Schlittens im zu untersuchenden rohrförmigen Körper eine kontinuierliche Drehbewegung ausführen und den Messwertaufnehmer mit konstanter steuerbarer Geschwindigkeit an der Wandung des rohrförmigen Körpers entlang führen, sodass sich ein schraubenförmig zuordenbare Registratur ermittelter Werte ergibt.

Das die beiden Radialteile verbindende Trageteil nimmt weitere zur Einrichtung gehörende Einzelelemente, wie beispielsweise den im Zusammenhang mit dem Betrieb des Messwertaufnehmers notwendigen Datenlogger, auf.

Sowohl Elektrode als auch Gegenelektrode sind unterwasserfähig ausgebildet, sodass selbst in einer Flüssigkeit, beispielsweise im Inneren eines gefüllten Tanks, eine Anwendung gegeben ist. Gleiches bezieht sich auf den Messwertaufnehmer.

Für die Durchführung des erfindungsgemässen Verfahrens ist es prinzipiell unerheblich, ob Gleich- oder Wechselspannung zum Einsatz kommt. Spannung und Stromstärke werden im Allgemeinen so gewählt, dass eine Gefährdung des Bedienungspersonales nicht gegeben ist.

Die erfindungsgemässe Lösung gestattet, mittels eines relativ einfacheren apparativen Aufwandes und sehr häufig bei Vermeidung erheblicher Zusatzarbeiten, wie Aufgrabungen oder gar Beseitigung von Bauteilen, Leckagen sicher festzustellen und gleichzeitig Schlussfolgerungen zur Grösse dieser Leckage und damit geeignete Schlussfolgerungen zu ihrer Beseitigung zu ziehen. Bedeutend ist, dass die Messungen entgegen der Richtung eines eine absperrende Wand durchdringenden Mediums erfolgen können, sodass beispielsweise Aufgrabungen im Umfeld eines Erdtanks, um die Leckage aufzuspüren, unterbleiben können, da eine zweifelsfreie Feststellung mit der erfindungsgemässen Lösung gegeben ist. Eine nach dem erfindungsgemässen Verfahren aufgebaute Anordnung ist bei sicherer Funktionsweise leicht transportier- und umsetzbar.

Die Erfindung soll im folgenden an 3 Ausführungsbeispielen näher erläutert werden, um mögliche Anwendungsfälle darzustellen. In der zugehörigen Zeichnung zeigt
- Fig. 1: die Ausbildung einer erfindungsgemässen Anordnung bei der Leckageortung eines teilweise unterirdisch angeordneten Einbaus, wie das bei einer Tiefgarage der Fall ist,
- Fig. 2: die ausgeschriebene Kurve der Feldänderungen für die beispielhafte Darstellung gemäss Fig. 1,

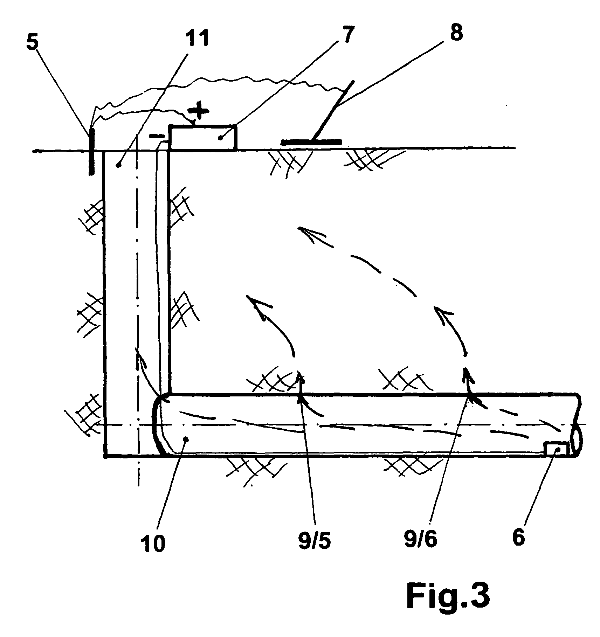

- Fig. 3: die prinzipielle Ausbildung einer erfindungsgemässen Anordnung bei der Leckageortung in einem Abwassersystem.
- Fig. 4: eine spezifische Ausführungsform einer Anordnung, die zur Leckageortung in einem rohrförmigen Körper dient, in der Seitenansicht,
- Fig. 5: die Vorderansicht der Fig. 4.

### Ausführungsbeispiel I:

Es steht als Aufgabe, in einem nach oben offenen im Erdreich 1 befindlichen Einbau, wie es beispielsweise eine Tiefgarage ist, festzustellen, wo dieser aus Bodenplatte 2 und Seitenwand 3 bestehende Einbau Undichtheiten 9/1, 9/2, 9/3 und 9/4 aufweist. Das Grundwasser steht von aussen bis zu einer Markierung 4 an und im Inneren des Einbaus sind Feuchtigkeitsstellen festzustellen.

Zu diesem Zweck der Feststellung der Undichtheiten wird ausserhalb des Einbaus auf der Geländeoberkante des Erdreiches 1 eine als Elektrode 5 ausgebildete Aufgabestelle angeordnet. Vorzugsweise handelt es sich hierbei um eine stabförmige Elektrode 5, die infolgedessen relativ leicht ins Erdreich eingebracht werden kann. Diese Elektrode 5 ist auf ihrem Aussendurchmesser bis zur Spitze reichend isoliert ist, sodass dort konzentriert der Strom austreten kann. Des weiteren wird im Inneren des Einbaus in einer relativ weiten Entfernung eine weitere als Abgreifstelle ausgebildeter Gegenpol 6 angeordnet.

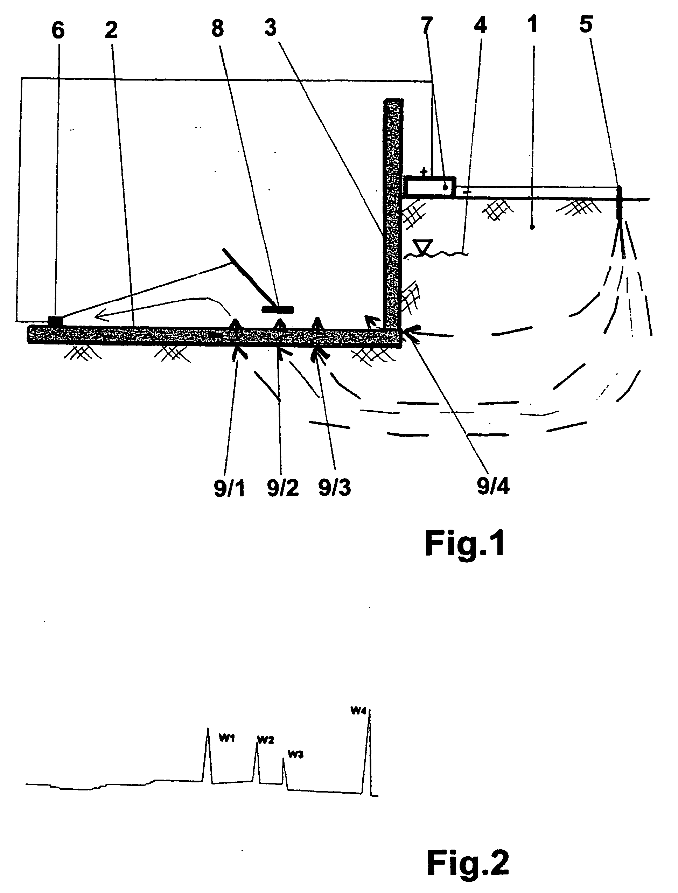

Elektrode 5 und Gegenpol 6 sind mit einer Spannungsquelle 7 verbunden. Mit deren Hilfe wird ein Strom von 150 Millivolt aufgegeben. Damit bildet sich zwischen Elektrode 5 und Gegenpol 6 ein elektrisches Feld aus. Dieses elektrische Feld wird dort gestört und verdichtet sich, wo ein Wasserdurchtritt gegeben ist. Im Inneren des Einbaus werden mit einem beweglichen Messwertaufnehmer 8, der mit dem Gegenpol 6 gekoppelt ist und zwischen Elektrode 5 und Gegenpol 6 linear bewegt wird, die empfangbaren Feldlinien hinsichtlich ihrer Dichte und unter Bezugnahme auf ihre räumliche Zuordnung registriert. Über eine mit der erfindungsgemässen Anordnung gekoppelte Recheneinheit, die mit zweckentsprechender Software betrieben wird, wird eine zugehörige Kurve gemäss Fig. 2 ausgeschrieben. Hier markieren sich die durch die Feldlinienverdickungen die Undichtheiten 9/1, 9/2, 9/3 und 9/4 als Wasserdurchtrittsstellen W1, W2, W3 und W4 deutlich und bei massstabsbezogener Fixierung in der Kurve ist ein exaktes Auslesen möglich.

Nach seitlichem Verschieben des Messwertaufnehmers 8 kann eine neue Kurve ermittelt und geschrieben werden, die zu veränderten Erkenntnissen hinsichtlich der Dichtheit führen kann und unter Umständen den Verlauf eines Risses markieren kann.

### Ausführungsbeispiel II:

Eine in 4m Tiefe unterirdisch verlegte Abwasserleitung 10 ist auf ihre Dichtheit hin zu kontrollieren. Trotz visueller Inaugenscheinnahme, die brauchbare Erkenntnisse nicht erbrachte, gibt es Anzeichen für einen unerwünschten Wasserabgang. Ebenso ist interessant, ob irgendwo etwa gar Wasser aus dem Bereich des Grundwassers zuläuft.

Zunächst ist ein Einstiegsschacht 11 vorhanden, von dem die zu kontrollierende Abwasserleitung 10 seitlich abführt.

Zum Zweck der Kontrolle wird deshalb vorzugsweise im oberen Bereich des Einstiegsschachtes 11 eine Elektrode 5 angebracht, die mit einem Pol der Spannungsquelle 7 verbunden ist. Des weiteren ist an das Ende der Messstrecke über ein motorisch angetriebenes Fahrwerk, einem kleinen Traktor, der Gegenpol 6 transportiert worden. Am Gegenpol 6 ist der Minus-Pol der Gleichspannungsquelle anliegend. Auf der über Abwasserleitung befindlichen Rasensohle wird der Messwertaufnehmer 8 bewegt, der mit der Elektrode 5 zur Erfassung von Referenzwerten elektrisch/elektronisch verbunden ist, um bei in die Abwasserleitung 10 ein- oder austretendem Grundwasser Anomalien als Feldlinienveränderungen zu erfassen.

Nach dem Herstellen seiner Funktionsfähigkeit werden Elektrode 5 und Gegenpol 6 mit einem Strom von 200mV beaufschlagt. Zwischen den Lagepunkten von Elektrode 5 und Gegenpol 6 bildet sich ein elektrisches Feld aus, das sich im wesentlichen entlang des Verlaufes der Abwasserleitung 10 erstrecken wird. Anomalien in der Wiedergabe der Feldlinien sind dort vorhanden, wo eine Muffe undicht ist.

Der Messwertaufnehmer 8 wird entlang der Abwasserleitung 10 zwischen den nach oben hin projezierten Koordinaten von Elektrode 5 und Gegenpol 6 bewegt und der Feldlinienverlauf erfasst und mitgeschrieben. Überall dort, wo sich Spitzen in diesem Feldlinienverlauf zeigen, ist eine Feldlinienverdichtung und somit eine Undichtheit vorhanden, die einer zweckentsprechenden Bewertung bedarf. Es werden schliesslich die Anomalien An Die Anomalien werden, wie bekannt, registriert und raumbezogen erfasst und ausgewiesen.

### Ausführungsbeispiel III:

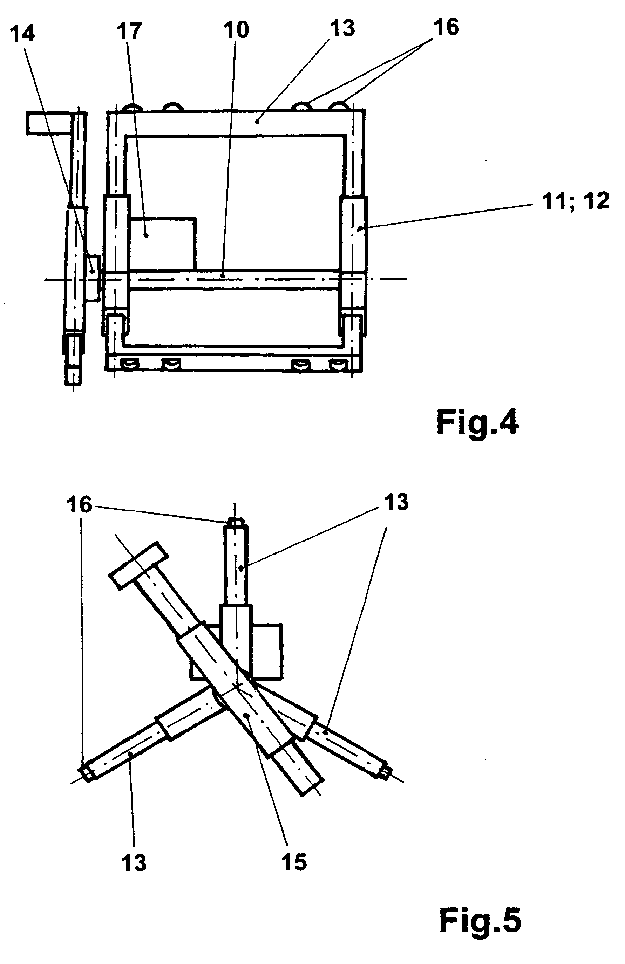

Eine spezifische Ausführungsform zur Leckageortung in einem Abwassersystem gemäss Fig. 4 besteht zunächst aus zwei sternförmigen Halterungen 11, die über ein Trageteil 10 miteinander verbunden sind. Jede der sternförmigen Halterungen 11 besitzt 3 in einem Winkel von jeweils 120 Winkelgrad zueinander angeordnete Radialteile 12, die teleskopisch ausziehbar gestaltet sind. Jeweils ein Radialteil 12 einer sternförmigen Halterung 11 ist mit dem zugehörigen anderen Radialteil 12 der zweiten sternförmigen Halterung 11 über ein u-förmig ausgebildetes Verbindungsteil 14 miteinander verbunden, sodass die beiden sternförmigen Halterungen 11 zueinander festgelegt sind. Jedes der u-förmig ausgebildeten Verbindungsteile 14 trägt auf der der Wandung des zu untersuchenden Abwassersystems zugewandten Seite Rollen 16, damit ein ungehindertes Verziehen der Einrichtung im Abwassersystem möglich ist und eine allseitige Führung gegeben ist.

Durch die teleskopisch ausziehbaren Radialteile 12 lässt sich der äussere Durchmesser der Einrichtung dem Innendurchmesser des zu untersuchenden Abwassersystems anpassen, sodass eine fortwährende Führung der Gesamtanordnung im Abwassersystem einstellbar ist.

An einer der beiden sternförmigen Halterungen 11 ist ein sich in radialer Richtung erstreckender Teleskoparm 15 angeordnet. Dieser trägt an seinem äusseren Ende den Messwertaufnehmer 8, der auf Grund der Anordnung am Teleskoparm 15 in eine Position gebracht werden kann, die in unmittellbarer Nähe zu den Wandungen des Abwassersystems liegt. Des weiteren ist in die sternförmige Halterung 11, an der der Teleskoparm 15 befestigt ist, ein Rotator 14 integriert, der den radial angeordneten Teleskoparm 15 in eine kontinuierliche Drehbewegung versetzt. Auf dem Trageteil 10 sind weitere notwendige Einzelelemente befestigt. Das kann besipielsweise der Datenlogger sein, das kann jedoch ebenso eine Antenne für den Messwertaufnehmer sein, mit deren Hilfe gewonnene Daten zu einer Registriereinheit weitergeleitet werden.

Auf die Darstellung von Elementen zum Klemmen der teleskopischen Verstellung von Teleskoparm 15 und Radialteilen 12 wurde verzichtet.

### Aufstellung der verwendeten Bezugszeichen:

- Erdreich: 1
- Bodenplatte: 2
- Seitenwand: 3
- Grundwasser-Markierung: 4
- Elektrode: 5
- Gegenpol: 6
- Stromquelle: 7
- Messwertaufnehmer: 8
- Undichtheiten: 9/1, 9/2, 9/3, 9/4, 9/5, 9/6
- Wasserdurchtrittsstellen: W1, W2, W3, W4
- Trageteil: 10
- sternförmige Halterung: 11
- Radialteil: 12
- Verbindungsteil: 13
- Rotator: 14
- Teleskoparm: 15
- Rollen: 16
- Datenlogger: 17

## Patentansprüche

1. Verfahren zur Feststellung einer Leckage in einer als absperrende Einrichtung wirkenden baulichen Einheit (2; 3), insbesondere Dichtungswand, Wandung eines Erdtanks, Grundbauwerk, medienführende Unterwasserleitung oder dergleichen, wobei das Verfahren die folgenden Schritte umfaßt:
a) Anordnen wenigstens einer als Aufgabestelle dienenden, elektrisch leitend ausgeführten Elektrode (5) auf einer Seite eines möglichen Feuchtezutritts (9/1; ...; 9/6) unter Bezugnahme auf die zu untersuchende bauliche Einheit (2; 3);
b) Anordnen wenigstens einer weiteren als Abgreifstelle dienenden, elektrisch leitend ausgeführten Elektrode (6) auf einer anderen Seite des möglichen Feuchtezutritts (9/1; ...; 9/6);
c) Aufgeben eines zeitlich konstanten elektrischen Stromes an der als Aufgabestelle dienenden Elektrode (5) mittels einer Stromquelle (7), so daß sich aufgrund des Stromes ein zeitlich konstantes elektrisches Feld in einem feuchten Umgebungsbereich der baulichen Einheit (2; 3) einstellt;
d) Abtasten des feuchten Umgebungsbereiches in einem festgelegten Raster mittels eines beweglichen lokalisierbaren Messwertaufnehmers (8), welcher einen Sensor und einen Datenlogger (17) umfaßt, und mit einer der Elektroden (5; 6) verbunden ist, wobei mit dem Sensor des Messwertaufnehmers (8) das elektrische Feld kennzeichnende Messwerte aufgenommen werden; und
e) Feststellen von Anomalien des Feldlinienverlaufs, indem die aufgenommenen Messwerte mit Referenzwerten verglichen werden, um den Ort des möglichen Feuchtezutritts (9/1; ...; 9/6) zu ermitteln.

2. Verfahren nach Anspruch 1, bei dem der das elektrische Feld erzeugende Strom ständig an der Aufgabestelle anliegt.

3. Verfahren nach Anspruch 1, bei dem der das elektrische Feld erzeugende Strom gepulst der Aufgabestelle übermittelt wird.

4. Verfahren nach einem der Ansprüche 1 bis 3, bei dem die Einzelteile einer Anordnung zur Durchführung des erfindungsgemäßen Verfahrens in einem Baustein zusammengefasst, in einem Verdachtsbereich montiert und die Leckageverhältnisse über einen vorbestimmten Zeitraum aufgezeichnet und der Auswertung ständig zur Verfügung gestellt werden.

5. Verfahren nach einem der Ansprüche 1 bis 4, dass die ermittelten Werte der elektrischen Feldlinien und ihrer Anomalien per Monotoring ausgewiesen werden.

6. Anordnung zur Durchführung des Verfahrens nach einem der Ansprüche 1 bis 5, mit:
- einer Stromquelle (7),
- wenigstens je einer als Aufgabestelle dienenden und einer weiteren als Abgreifstelle dienenden, elektrisch leitenden Elektrode (5; 6), die mit der Stromquelle (7) verbunden sind, wobei unter Bezugnahme auf eine auf Dichtheit zu untersuchende bauliche Einheit die eine elektrisch leitende Elektrode (5; 6) auf der einen Seite des möglichen Feuchtezutritts (9/1; ...; 9/6) und die andere elektrisch leitende Elektrode (5; 6) auf der anderen Seite des möglichen Feuchtezutritts (9/1; ...; 9/6) angeordnet ist,
- einem aus Sensor und Datenlogger (17) bestehenden, räumlich bewegbaren Messwertaufnehmer (8), welcher zwischen den zur Auswertefläche projizierten Abständen von Aufgabestelle und Abgreifstelle angeordnet und mit einer der beiden Elektroden (5; 6) elektrisch/elektronisch verbunden ist, wobei der Messwertaufnehmer (8) in der Nähe von als relevant zuordenbaren Bereichen platziert ist und dort messbare Werte für das vorhandene elektrische Feld aufnehmend und mit den Werten vergleichend ausgebildet ist, welche an der mit dem Messwertaufnehmer (8) verbundenen Elektrode (5; 6) anliegen,
- einer Einrichtung zur Lokalisierung des Messwertaufnehmers (8) bei der Messung,
- einer Einrichtung zur Feststellung der Anomalien des Feldlinienverlaufs und
- einer Einrichtung zum Anzeigen des Ortes des Feuchtezutritts (9/1; ...; 9/6).

7. Anordnung nach Anspruch 6, bei der der Messwertaufnehmer (8) für eine Leckagefeststellung in einem rohrförmigen Körper auf einem Schlitten angeordnet ist, der in Längsrichtung des zu untersuchenden rohrförmigen Körpers eine Längsausdehnung aufweist, im weiteren aus zueinander beabstandeten und miteinander in Richtung der Mittellängsachse wenigstens zwei sternförmigen Halterungen (11) gleicher Teilung besteht, die symmetrisch zueinander angeordnet sind und die in identischer Teilung strahlenförmig angeordnet Radialteile (12) aufweisen, die bezogen auf die sternförmigen Halterungen (11) gleicher Teilung symmetrisch zueinander ausgebildet sind, die Enden der strahlenförmig angeordneten Radialteile (12) der sternförmigen Halterungen brückenartig durch jeweils ein U-förmig ausgebildetes Verbindungsteil (13) paarweise miteinander verbunden sind, wenigstens einem der beiden Radialteile in Richtung der gedachten Mittellängsachse des Schlittens an einer freien Stirnseite ein Rotator (14) mit einem weiteren Teleskoparm (15) in radialer Richtung sich erstreckend vorgesetzt, der an seinem vom Rotator (14) entfernten Ende eine Halterung für den Messwertaufnehmer (8) und der Schlitten einen Antrieb für die Initiierung einer Drehbewegung des Rotators (14) aufweisend ausgebildet ist.

8. Anordnung nach Anspruch 7, bei der die sternförmige Halterung (11) 3 strahlenförmige Radialteile (12) aufweisend ausgebildet ist.

9. Anordnung nach Anspruch 8, bei der die strahlenförmigen Radialteile (12) im Winkel von 120 Winkelgrad angeordnet sind.

10. Anordnung nach einem der Ansprüche 7 bis 9, bei der die Radialteile (12) in radialer Richtung teleskopisch ausgebildet sind.

11. Anordnung nach einem der Ansprüche 7 bis 10, bei der die dem zu untersuchenden rohrförmigen Körper zugewandte Aussenseite der U-förmig ausgebildeten Verbindungsteile (13) Rollen tragend ausgebildet ist.

12. Anordnung nach einem der Ansprüche 7 bis 11, bei der in Richtung der Mittellängsachse des Schlittens die sternförmigen Halterungen (11) verbindend ein Trageteil (10) vorhanden ist.

13. Anordnung nach Anspruch 12, bei der das Trageteil (11) weitere zur Anordnung gehörende Einzelelemente aufnehmend gestaltet ist.

14. Anordnung nach einem der Ansprüche 7 bis 13, bei der die Registriereinrichtung die übermittelten Werte punktuell ermittelnd und aufbereitend aufgebaut ist.

15. Anordnung nach einem der Ansprüche 7 bis 13, bei der die Registriereinrichtung die übermittelten Werte linienförmig ermittelnd und aufbereitend aufgebaut ist.

16. Anordnung nach einem der Ansprüche 14 oder 15, bei der die Registriereinrichtung übermittelte Werte graphisch anzeigend aufgebaut ist.

17. Anordnung nach einem der Ansprüche 6 und 14 bis 16, die die Messwerte für die Ermittlung geophysikalischer Kennwerte bereitstellend und aufbereitend aufgebaut ist.

18. Anordnung nach einem der Ansprüche 6 bis 17, bei der wenigstens eine der als Aufgabestelle und als Abgreifstelle dienenden Elektroden (5; 6) einen ortungsfähigen Baustein aufweisend ausgebildet sind.

19. Anordnung nach einem der Ansprüche 6 bis 18, bei der die Elektroden (5; 6) mit einer als Sensor ausgebildeten Empfangseinrichtung elektrisch / elektronisch gekoppelt sind.

20. Anordnung nach einem der Ansprüche 6 bis 18, bei der die Elektroden (5; 6) als Sensor ausgebildet sind.

21. Anordnung nach einem der Ansprüche 6 bis 20, bei der die Stromquelle (7) eine transportable Einrichtung zur Pufferung des elektrischen Stromes ist.

22. Anordnung nach einem der Ansprüche 6 bis 21, bei der der Messwertaufnehmer (8) eine Momentananzeige aufweisend ausgebildet ist.

23. Anordnung nach einem der Ansprüche 6 bis 22, bei der die die Kennwerte des elektrischen Feldes fixierende Registriereinrichtung elektrisch/elektronisch mit einer auslesbaren Einrichtung, die bezogen auf einen zeitlichen Verlauf gemessene Kennwerte speichert, verbunden ist.

24. Anordnung nach einem der Ansprüche 6 bis 23, bei der die als Aufgabe- stelle und als Abgreifstelle dienenden Elektroden (5; 6) unterwasserfähig arbeitend ausgebildet sind.

25. Anordnung nach einem der Ansprüche 6 bis 24, bei der die Verbindung wenigstens einer Elektrode (5;6) mit der Registriereinrichtung durch eine funkfähig ausgebildete Einrichtung erfolgt ist.

26. Anordnung nach einem der Ansprüche 6 bis 24, bei der die Verbindung wenigstens einer Elektrode (5; 6) mit der Registriereinrichtung durch eine nach dem Prinzip eines Global-Position-Systems arbeitenden Einrichtung erfolgend ausgebildet ist.

27. Anordnung nach einem der Ansprüche 6 bis 26, bei der der Messwertaufnehmer (8) rotationsfähig ausgebildet ist.

## Claims

1. Method for detecting a leak in a structural unit (2; 3) acting as an isolating device, in particular a sealing wall, a wall of a tank in the ground, a foundation structure, an underground line carrying a medium or the like, the method comprising the following steps:
a) arranging at least one electrically conductive electrode (5) serving as an output point on one side of a possible ingress of moisture (9/1; **...;** 9/6) with reference to the structural unit (2; 3) to be investigated;
b) arranging at least one further electrically conductive electrode (6) serving as a pick-up point on another side of the possible ingress of moisture (9/1; ...; 9/6);
c) discharging an electric current which is constant over time at the electrode (5) serving as an output point by means of a current source (7) so that, because of the current, an electric field that is constant over time is established in a moist surrounding region of the structural unit (2; 3);
d) sampling the moist surrounding region in a defined grid by means of a movable, locatable measured value pick-up (8), which comprises a sensor and a data logger (17) and is connected to one of the electrodes (5; 6), measured values characterizing the electric field being picked up with the sensor of the measured value pick-up (8); and
e) detecting anomalies of the course of the field lines by the measured values picked up being compared with reference values, in order to determine the location of the possible ingress of moisture (9/1; ...; 9/6).

2. Method according to Claim 1, in which the current producing the electric field is applied continuously to the output point.

3. Method according to Claim 1, in which the current producing the electric field is transmitted to the output point in pulsed form.

4. Method according to one of Claims 1 to 3, in which the individual parts of an arrangement for carrying out the method according to the invention are combined into a module and are mounted in a suspected region and the leakage conditions are recorded over a predetermined time period and made available continuously for evaluation.

5. Method according to one of Claims 1 to 4, **characterized in that** the determined values of the electric field lines and their anomalies are made evident by means of monitoring.

6. Arrangement for carrying out the method according to one of Claims 1 to 5, comprising:
- a current source (7),
- at least in each case an electrically conductive electrode (5; 6) serving as an output point and a further electrically conductive electrode (5; 6) serving as a pick-up point, which are connected to the current source (7), one electrically conductive electrode (5; 6) being arranged on one side of the possible ingress of moisture (9/1; ...; 9/6) and the other electrically conductive electrode (5; 6) being arranged on the other side of the possible ingress of moisture (9/1; ...; 9/6) with reference to a structural unit to be investigated for tightness,
- a spatially movable measured value pick-up (8) comprising sensor and data logger (17), which is arranged between the spacings of the output point and pick-up point projected in relation to the evaluation area and is connected electrically/electronically to one of the two electrodes (5; 6), the measured value pick-up (8) being placed in the vicinity of regions classified as relevant and being designed to pick up measured values there for the electric field present and to compare them with the values which are present on the electrode (5; 6) connected to the measured value pick-up (8),
- a device for locating the measured value pick-up (8) during the measurement,
- a device for detecting the anomalies of the course of the field lines, and
- a device for indicating the location of the ingress of moisture (9/1; ...; 9/6).

7. Arrangement according to Claim 6, in which the measured value pick-up (8) for detecting a leak in a tubular body is arranged on a carriage which has a longitudinal extent in the longitudinal direction of the tubular body to be investigated, further comprises at least two star-shaped holders (11) which are spaced apart from one other at identical pitch in the direction of the central longitudinal axis, are arranged symmetrically in relation to one other and which have radial parts (12) arranged like rays with identical pitch, which are formed symmetrically in relation to one another as based on the star-shaped holders (11) of identical pitch, the ends of the radial parts (12) arranged like rays of the star-shaped holders being connected to one another in pairs in the manner of a bridge by a U-shaped connecting part (13) in each case, at least one of the two radial parts having placed in front of it in the direction of the imaginary central longitudinal axis of the carriage, at its free end, a rotator (14) having a further telescopic arm (15) extending in the radial direction and which, at its end remote from the rotator (14), is designed to have a holder for the measured value pick-up (8) and the carriage being designed to have a drive for the initiation of a rotational movement of the rotator (14).

8. Arrangement according to Claim 7, in which the star-shaped holder (11) is designed to have 3 ray-like radial parts (12).

9. Arrangement according to Claim 8, in which the ray-like radial parts (12) are arranged at an angle of 120 degrees.

10. Arrangement according to one of Claims 7 to 9, in which the radial parts (12) are designed to be telescopic in the radial direction.

11. Arrangement according to one of Claims 7.to 10, in which the outside of the U-shaped connecting parts (17) facing the tubular body to be investigated is designed to carry rollers (13).

12. Arrangement according to one of Claims 7 to 11, in which, in the direction of the central longitudinal axis of the carriage, there is a loadbearing part (10) connecting the star-shaped holders (11).

13. Arrangement according to Claim 12, in which the loadbearing part (10) is configured to accommodate further individual elements belonging to the arrangement.

14. Arrangement according to one of Claims 7 to 13, in which the registering device is constructed to determine and condition the transmitted values point by point.

15. Arrangement according to one of Claims 7 to 13, in which the registering device is constructed to determine and condition the transmitted values line by line.

16. Arrangement according to one of Claims 14 or 15, in which the registering device is constructed to display the transmitted values graphically.

17. Arrangement according to one of Claims 6 and 14 to 16, which is constructed to provide and condition the measured values for the determination of geophysical characteristic values.

18. Arrangement according to one of Claims 6 to 17, in which at least one of the electrodes (5; 6) serving as an output point or as a pick-up point is designed to have a module capable of being located.

19. Arrangement according to one of Claims 6 to 18, in which the electrodes (5; 6) are coupled electrically/electronically to a receiving device constructed as a sensor.

20. Arrangement according to one of Claims 6 to 18, in which the electrodes (5; 6) are constructed as a sensor.

21. Arrangement according to one of Claims 6 to 20, in which the current source (7) is a transportable device for buffering the electric current.

22. Arrangement according to one of Claims 6 to 21, in which the measured value pick-up (8) is designed to have an instantaneous display.

23. Arrangement according to one of Claims 6 to 22, in which the registering device fixing the characteristic values of the electric field is connected electrically/electronically to a device which can be read and which stores characteristic values measured in relation to a time base.

24. Arrangement according to one of Claims 6 to 23, in which the electrodes (5; 6) serving as an output point and as a pick-up point are designed to be capable of operating under water.

25. Arrangement according to one of Claims 6 to 24, in which the connection between at least one electrode (5; 6) and the registering device is provided by a device designed to be capable of radio transmission.

26. Arrangement according to one of Claims 6 to 24, in which the connection between at least one electrode (5; 6) and the registering device is designed to be carried out by a device operating on the principle of a global position system.

27. Arrangement according to one of Claims 6 to 26, in which the measured value pick-up (8) is designed to be capable of rotation.

## Revendications

1. Procédé de détermination de l'existence de fuite dans une unité (2; 3) de construction agissant comme dispositif bloquant, en particulier une paroi d'étanchéité, une paroi d'un réservoir enterré, un ouvrage souterrain, une conduite souterraine guidant un fluide ou analogue, le procédé comprenant les étapes suivantes :
a) agencement d'au moins une électrode (5), servant de point d'alimentation, réalisée de façon conductrice de l'électricité, sur une face d'un accès d'humidité (9/1,..., 9/6) possible, en référence à l'unité de construction (2; 3) à examiner;
b) agencement d'au moins une autre électrode (6), servant de point de prélèvement, réalisée de façon conductrice de l'électricité, sur une autre face de l'accès d'humidité (9/1; ...; 9/6) possible;
c) Application d'un courant électrique temporellement constant sur l'électrode (5) servant de point d'alimentation au moyen d'une source de courant (7), de manière que, du fait du courant, un champ électrique temporellement constant s'établisse dans une zone d'environnement humide de l'unité de construction (2; 3);
d) Scrutation de la zone d'environnement humide selon une trame fixée, au moyen d'un enregistreur de valeur de mesure (8) mobile, localisable, qui comprend un capteur et un enregistreur chronologique automatique de données (17), et est relié à l'une des électrodes (5; 6), sachant que des valeurs de mesure, caractérisant le champ électrique, sont enregistrées avec le capteur de l'enregistreur de valeur (8); et
e) Détermination de l'existence d'anomalies de l'allure de lignes de champs, en ce que les valeurs de mesure enregistrées sont comparées à des valeurs de référence, pour déterminer le site de l'accès d'humidité (9/1; ...; 9/6) éventuel.

2. Procédé selon la revendication 1, dans lequel le courant produisant le champ électrique est appliqué en permanence au point d'alimentation.

3. Procédé selon la revendication 1, dans lequel le courant produisant le champ électrique est transmis de façon pulsée au point d'alimentation.

4. Procédé selon l'une des revendications 1 à 3, pour lequel les parties individuelles d'un dispositif, pour mettre en oeuvre le procédé selon l'invention, sont regroupés dans un composant, monté dans une zone à suspicion, et les conditions de fuite sont enregistrées sur une durée prédéterminée et mises à disposition en permanence pour l'évaluation.

5. Procédé selon l'une des revendications 1 à 4, **caractérisé en ce que** les valeurs déterminées des lignes de champs électriques et leurs anomalies sont mises en évidence par surveillance.

6. Dispositif pour mettre en oeuvre le dispositif selon l'une des revendications 1 à 5, comprenant :
- une source de courant (7),
- au moins chaque fois une électrode (5; 6) conductrice de l'électricité servant de point d'alimentation et une autre servant de point de prélèvement, reliées à la source de courant (7), sachant que, en se référant à une unité de construction dont on examine l'étanchéité, une première électrode (5; 6) conductrice de l'électricité est disposée sur une face de l'accès d'humidité (9/1; ...; 9/6) éventuelle et l'autre électrode (5; 6) conductrice de l'électricité est disposée sur l'autre face de l'accès d'humidité (9/1; ...; 9/6) éventuel,
- un enregistreur de valeur de mesure (8), déplaçable dans l'espace, formé d'un capteur et d'un enregistreur chronologique automatique de données (17), disposé entre les espacements, projetés par rapport à la face d'évaluation, du point d'alimentation et du point de prélèvement, et relié électriquement/électroniquement à l'une des deux électrodes (5; 6), sachant que l'enregistreur de valeur de mesure (8) est placé à proximité de zones susceptibles d'être associées de façon pertinente, et y est réalisé de façon à pouvoir enregistrer des valeurs susceptibles d'y être mesurées pour le champ électrique existant et réalisé de façon à pouvoir comparer aux valeurs appliquées sur l'électrode (5; 6) reliée à l'enregistreur de valeur de mesure (8),
- un dispositif de localisation de l'enregistreur de valeur de mesure (8) lors de la mesure,
- un dispositif pour déterminer l'existence de l'anomalie de l'allure de ligne de champ, et
- un dispositif pour l'affichage du site de l'accès d'humidité (9/1; ...; 9/6).

7. Dispositif selon la revendication 6, pour lequel l'enregistreur de valeurs de mesure (8) est disposé sur un chariot, pour procéder à une détermination de l'existence d'une fuite dans un corps tubulaire, chariot présentant, en direction longitudinale du corps tubulaire à examiner, une étendue en longueur, formé, en outre, d'au moins deux fixations (11) en étoile, ayant une même division, espacées l'une de l'autre et placées ensemble en direction de l'axe longitudinal médian, fixations réalisées symétriquement l'une par rapport à l'autre en se référant aux fixations (11) disposées en forme d'étoile implantées selon une division identique, les extrémités des parties radiales (12), disposées en forme de rayon, des fixations en forme d'étoiles étant reliées ensemble par paires à la façon d'un pont par chaque fois une partie de liaison (13) réalisée en forme de U, un rotor (14), en s'étendant en direction radiale, étant posté en avant d'au moins l'une des deux parties radiales, en direction de l'axe longitudinal médian imaginaire du chariot sur une face frontale libre, par un autre bras télescopique (15) qui, sur son extrémité éloignée du rotor (14), présente une fixation pour l'enregistreur de valeur de mesure (8), et le chariot étant réalisé en présentant un entraînement pour l'initialisation d'un mouvement rotatif du rotor (14).

8. Dispositif selon la revendication 7, dans lequel la fixation (11) en forme d'étoile est réalisée en présentant 3 parties radiales (12) en forme de rayons.

9. Dispositif selon la revendication 8, dans lequel les parties radiales (12) en forme de rayons sont disposées sous un angle de 120° angulaire.

10. Dispositif selon l'une des revendications 7 à 9, dans lequel les parties radiales (12) sont réalisées de façon télescopique en direction radiale.

11. Dispositif selon l'une des revendications 7 à 10, pour lequel la face extérieure, tournée vers le corps en forme tubulaire à examiner, des parties de liaison (13) réalisées en forme de U est réalisée en portant des galets.

12. Dispositif selon l'une des revendications 7 à 11, pour lequel, dans la direction de l'axe longitudinal médian du chariot, est prévue une partie support (10) reliant les fixations (11) en forme d'étoile.

13. Dispositif selon la revendication 12, pour lequel la partie support (11) est formée en supportant d'autres éléments individuels appartenant au dispositif.

14. Dispositif selon l'une des revendications 7 à 13, pour lequel le dispositif d'enregistrement est construit en déterminant et en préparant ponctuellement les valeurs de mesure transmises.

15. Dispositif selon l'une des revendications 7 à 13, pour lequel le dispositif d'enregistrement est construit en déterminant et en préparant, en forme linéaire, les valeurs transmises.

16. Dispositif selon l'une des revendications 14 ou 15, pour lequel le dispositif d'enregistrement est construit en affichant graphiquement les valeurs déterminées.

17. Dispositif selon l'une des revendications 6 et 14 à 16, construit en fournissant et en préparant les valeurs de mesure, pour la détermination de valeurs caractéristiques géophysiques.

18. Dispositif selon l'une des revendications 6 à 17, pour lequel au moins l'une des électrodes (5; 6), servant de point d'alimentation et de point de prélèvement, est réalisée en présentant un composant apte à accomplir une localisation.

19. Dispositif selon l'une des revendications 6 à 18, pour lequel les électrodes (5; 6) sont couplées électriquement/électroniquement à un dispositif récepteur réalisé sous forme de capteur.

20. Dispositif selon l'une des revendications 6 à 18, pour lequel les électrodes (5; 6) sont réalisées sous forme de capteur.

21. Dispositif selon l'une des revendications 6 à 20, pour lequel la source de courant (7) est un dispositif transportable, permettant la mise en tampon du courant électrique.

22. Dispositif selon l'une des revendications 6 à 21, pour lequel l'enregistreur de valeurs de mesure (8) est réalisé en présentant un affichage actuel.

23. Dispositif selon l'une des revendications 6 à 22, pour lequel le dispositif d'enregistrement, fixant les valeurs caractéristiques du champ électrique, est relié électriquement/électroniquement à un dispositif pouvant faire l'objet d'une lecture, mémorisant des valeurs caractéristiques mesurées en se référant à une allure temporelle.

24. Dispositif selon l'une des revendications 6 à 23, pour lequel les électrodes (5; 6) servant de point d'alimentation et de point de prélèvement sont réalisées en travaillant immergées dans l'eau.

25. Dispositif selon l'une des revendications 6 à 24, pour lequel la liaison d'au moins l'une des électrodes (5; 6) au dispositif d'enregistrement se fait au moyen d'un dispositif réalisé de façon à permettre une activité radio.

26. Dispositif selon l'une des revendications 6 à 24, pour lequel la liaison d'au moins une électrode (5; 6) au dispositif d'enregistrement est réalisée en réalisant un dispositif travaillant selon le principe d'un système de positionnement global.

27. Dispositif selon l'une des revendications 6 à 26, pour lequel l'enregistreur de valeurs de mesure (8) est réalisé de façon à pouvoir tourner.
